# EUROPEAN PATENT APPLICATION

(11) **EP 3 196 502 A1**
(43) Date of publication of application: **26.07.2017**
(21) Application number: 15841653.7
(22) Date of filing: 04.09.2015
(51) Int. Cl.: F16F 9/32, F16F 9/36

(54) **DAMPER**

(30) Priority: 16.09.2014 JP 2014187272
(71) Applicant: KYB Corporation, Tokyo 105-6111 (JP)
(72) Inventor: CHIKAMATSU Satoshi, Tokyo 105-6111 (JP); HIROSE, Mitsuhiko, Tokyo 105-6111 (JP)
(74) Representative: Grünecker Patent- und Rechtsanwälte PartG mbB
(86) International application number: PCT/JP2015/075224
(87) International publication number: WO 2016/043067

(57) **Abstract**

A shock absorber 100, 200, 300 includes: a bottomed cylindrical outer tube 2a that is disposed so as to cover an inner case 1, and that is formed of a resin and is closed at one end by a closing part 2c; a joint member 20, 21, 22 that is embedded by insert molding in an opening end 2b of the outer tube 2a; and a coupling member 24, 25, 26 that is coupled to the joint member 20, 21, 22.

## Description

### TECHNICAL FIELD

The present invention relates to a shock absorber.

### BACKGROUND ART

JP2012-237454A discloses a twin-tube type shock absorber provided with an inner tube into which a piston is slidably inserted, and an outer tube formed of a metal, wherein a reservoir is formed between the inner tube and the outer tube. A caulking part for retaining the inner tube and a rod guide within the outer tube is provided at a tube end of the outer tube of the twin-tube type shock absorber. Further, JP2013-181582A discloses a shock absorber in which the outer tube is formed of a resin in order to reduce the weight.

### SUMMARY OF INVENTION

In general, the strength of a member formed of a resin is lower than the strength of a member formed of a metal. Therefore, in the case that the inner tube, etc. is retained within the outer tube formed of a resin by a caulking part provided at a tube end of the outer tube, it is necessary to increase the thickness of the outer tube near the caulking part in order to secure a strength that is equivalent to the case when using an outer tube formed of a metal. However, if the thickness is increased, then the weight reducing effect achieved by making the outer tube out of resin will decrease, and the outer diameter of the outer tube will increase which may lead to interference with other parts.

An object of the present invention is to enable the inner tube, etc. to be retained within the outer tube in a twin-tube type shock absorber without increasing the thickness of the outer tube even if the outer tube is formed of a resin.

According to one aspect of the present invention, a shock absorber includes: an inner case filled with hydraulic fluid; and an outer case disposed so as to cover the inner case, the outer case forming a reservoir for storing the hydraulic fluid between the outer case and the inner case. The outer case includes: a bottomed cylindrical outer tube formed of a resin, the outer tube being closed at one end by a closing part; and a joint member embedded by insert molding in an opening end of the outer tube. The shock absorber further includes a coupling member coupled to the joint member. The inner case is sandwiched by the coupling member and the closing part of the outer tube so as to be retained within the outer case.

### BRIEF DESCRIPTION OF DRAWINGS

FIG. 1 is a cross-section view of a shock absorber according to a first embodiment of the present invention;
FIG. 2 is an enlarged view of the portion indicated as II in FIG. 1;
FIG. 3 is a cross-section view of a joint member;
FIG. 4 is a partially enlarged cross-section view of a shock absorber according to a second embodiment of the present invention; and
FIG. 5 is a partially enlarged cross-section view of a shock absorber according to a third embodiment of the present invention.

### DESCRIPTION OF EMBODIMENTS

Embodiments of the present invention will now be explained below while referring to the attached drawings.

### <First Embodiment>

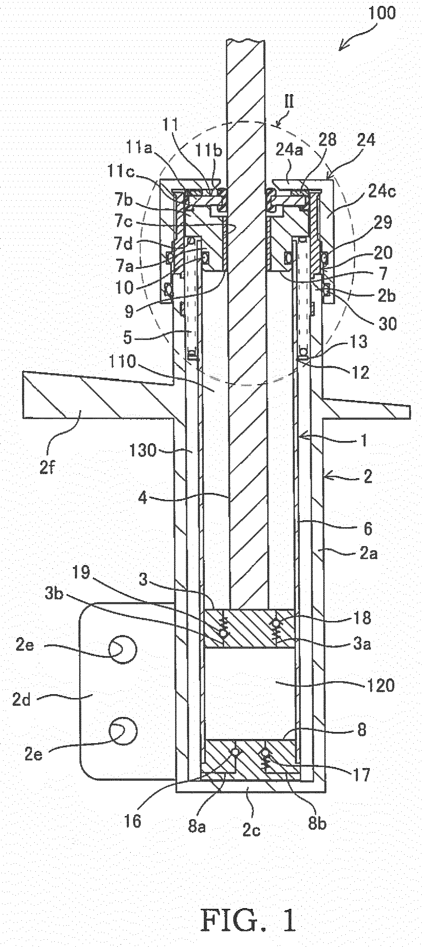

A shock absorber 100 according to a first embodiment of the present invention will now be explained referring to FIGS. 1 to 3. The shock absorber 100 shown in FIG. 1 is a twin-tube type shock absorber used in a strut-type suspension of a vehicle such as an automobile.

As shown in FIG. 1, the shock absorber 100 includes the following: an inner case 1 that is filled with hydraulic oil which serves as a hydraulic fluid; an outer case 2 that is disposed so as to cover the inner case 1, wherein a reservoir 130 that stores the hydraulic fluid is formed between the outer case 2 and the inner case 1; a cap member 24 which serves as a coupling member that is coupled to the outer case 2; a piston 3 that is slidably inserted into the inner case 1 and partitions the inside of the inner case 1 into an extension-side chamber 110 and a contraction-side chamber 120; and a piston rod 4 that is inserted into the inner case 1 such that it can move into and out of the inner case 1 and that is connected at one end to the piston 3. The shock absorber 100 is connected at the other end of the piston rod 4 to a vehicle body via an upper mount (not illustrated), and is joined to a support member such as a knuckle (not illustrated) that supports a vehicle wheel via brackets 2d formed on the outer case 2.

The inner case 1 includes the following: a cylindrical inner tube 6; a rod guide 7 that is slidably inserted into an end of the inner tube 6 on the extension-side chamber 110 side, and slidably supports the piston rod 4; and a base valve 8 that is fitted into an end of the inner tube 6 on the contraction-side chamber 120 side. These members that constitute the inner case 1 are formed of a steel material or aluminum alloy.

The rod guide 7 includes the following: a small-diameter part 7a that is slidably inserted into the inner tube 6; a large-diameter part 7b that has a larger diameter than that of the small-diameter part 7a; and a rod insertion hole 7c that is formed to penetrate in the axial direction and into which the piston rod 4 is inserted. A seal member 10 is provided on an outer peripheral surface of the small-diameter part 7a that slidingly contacts an inner peripheral surface of the inner tube 6. Even if the rod guide 7 slides relative to the inner tube 6, any gaps between the inner tube 6 and the rod guide 7 are sealed due to the existence of the seal member 10. Therefore, hydraulic oil is prevented from flowing out from the extension-side chamber 110 to the reservoir 130. Further, a bush 9 is inserted into the rod insertion hole 7c. The piston rod 4 that is inserted into the rod insertion hole 7c is slidably supported by the rod guide 7 via the bush 9.

The base valve 8 includes passages 8a and 8b which establish communication between the contraction-side chamber 120 and the reservoir 130. A check valve 16, which opens during extension of the shock absorber 100 to open the passage 8a, is provided in the passage 8a. A damping valve 17, which opens during contraction of the shock absorber 100 to open the passage 8b and applies resistance against the flow of hydraulic oil moving from the contraction-side chamber 120 to the reservoir 130 through the passage 8b, is provided in the passage 8b.

The piston 3 that is slidably inserted into the inner case 1 includes passages 3a and 3b which establish communication between the extension-side chamber 110 and the contraction-side chamber 120. A damping valve 18, which opens during extension of the shock absorber 100 to open the passage 3a and applies resistance against the flow of hydraulic oil moving from the extension-side chamber 110 to the contraction-side chamber 120 through the passage 3a, is provided in the passage 3a. A check valve 19, which opens during contraction of the shock absorber 100 to open the passage 3b, is provided in the passage 3b.

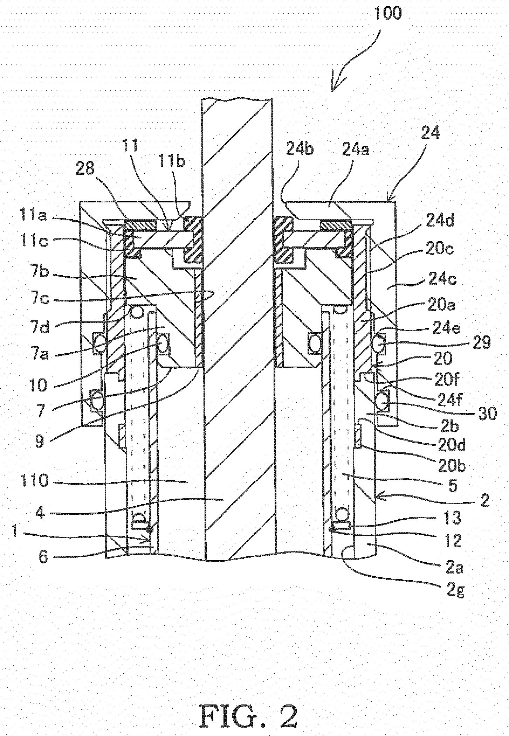

As shown in FIGS. 1 and 2, the outer case 2 includes the following: an outer tube 2a that is formed coaxially with the inner tube 6; a joint member 20, one end of which is embedded by insert molding in an opening end 2b of the outer tube 2a; a closing part 2c that closes the end of the outer tube 2a on the contraction-side chamber 120 side; a pair of brackets 2d that extend opposing each other along the axial direction from the outer periphery of the outer tube 2a; and a suspension spring receiving part 2f that is formed in an approximately annular shape on the outer periphery of the outer tube 2a. The joint member 20 is formed of a steel material or aluminum alloy, and is integrally molded by insert molding together with the outer tube 2a, the closing part 2c, the brackets 2d, and the suspension spring receiving part 2f which are formed of a resin. As the synthetic resin for forming the outer tube 2a, etc., a synthetic resin comprising carbon fibers in order to improve the strength and rigidity is preferably used.

The support member such as a knuckle that supports the vehicle wheel is inserted between the pair of brackets 2d and is joined by bolts (not illustrated) that are inserted into bolt holes 2e formed in the brackets 2d.

The suspension spring receiving part 2f, which is formed on the outer periphery of the outer case 2 similar to the brackets 2d, supports one end of a suspension spring (not illustrated). Ribs are preferably provided between the outer case 2 and the brackets 2d and between the outer case 2 and the suspension spring receiving part 2f for the purpose of reinforcement.

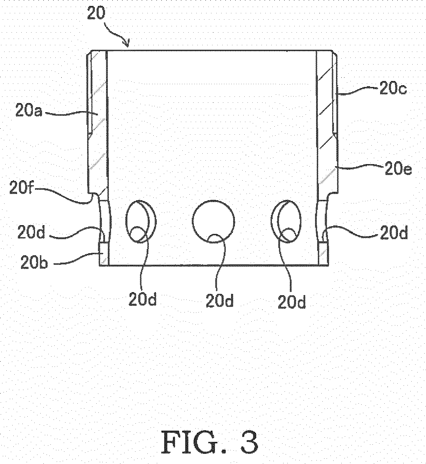

As shown in FIG. 3, the joint member 20 is a cylindrical member having on one end side a joining part 20a in which male threads 20c are formed on the outer peripheral surface thereof, and having on the other end side an insert part 20b which is embedded in the opening end 2b of the outer tube 2a. Further, a seal part 20e, which has not been subjected to thread processing on the outer peripheral surface thereof, is provided on a portion of the joining part 20a toward the insert part 20b.

The outer diameter of the insert part 20b is formed to be smaller than that of the joining part 20a, and a stepped part 20f is formed between the insert part 20b and the joining part 20a. Further, a plurality of locking holes 20d which penetrate in the radial direction are provided in the insert part 20b at intervals in the circumferential direction. In FIG. 3, there are eight locking holes 20d. The number of locking holes 20d is not limited thereto, and may be set to any number. Further, the shape of the locking holes 20d may be rectangular or triangular, and may be any shape as long as the shape allows for molten resin to flow in during insert molding.

During insert molding, molten resin reaches the stepped part 20f while surrounding the insert part 20b from the outer periphery side and flows into the locking holes 20d. The opening end 2b of the outer tube 2a illustrated in FIG. 2 is formed in this way. The inner diameter of the opening end 2b is set to be equivalent to the inner diameter of the insert part 20b, and the outer diameter of the opening end 2b is set to be equivalent to the outer diameter of the joining part 20a. In order to increase the bonding strength between the outer tube 2a and the joint member 20, the inner diameter of the opening end 2b may be set to be smaller than the inner diameter of the insert part 20b and the outer diameter of the opening end 2b may be set to be larger than the outer diameter of the joining part 20a.

In general, in a resin member formed by injection molding, a sink which contracts after molding may be formed. In particular, if the resin member has a cylindrical shape, such a sink will contract radially inward. Therefore, in the case that insert molding is carried out such that the insert part 20b is disposed on the outer periphery side of the outer tube 2a, resin which has flowed into the locking holes 20d from the inner periphery side will contract radially inward after molding, and thus the amount of resin that remains within the locking holes 20d decreases. If the amount of resin for filling the locking holes 20d decreases in this way, the force by which the outer tube 2a retains the joint member 20 may decrease and the joint member 20 may come out from the outer tube 2a.

On the other hand, in the shock absorber 100 according to the first embodiment, insert molding is carried out so that the insert part 20b in which the locking holes 20d are formed is disposed on the inner periphery side of the outer tube 2a. Therefore, even if a sink occurs, the amount of resin that remains within the locking holes 20d is large compared to the case in which the insert part 20b is disposed on the outer periphery side of the outer tube 2a. As a result, the bonding force between the joint member 20 and the outer tube 2a can be secured. In order to improve the bonding force between the joint member 20 and the outer tube 2a, in addition to the locking holes 20d, projections or the like which protrude radially outward or in the axial direction may also be provided on the insert part 20b. In this case, the projections or the like are in a state in which they are biting into the resin that forms the outer tube 2a.

The cap member 24 includes a cylindrical part 24c that covers the outer periphery side of the joint member 20, and an annular extension part 24a that extends radially inward from the end of the cylindrical part 24c, wherein an insertion hole 24b into which the piston rod 4 is inserted is formed in the center of the extension part 24a. The cap member 24 is formed of a steel material or an aluminum alloy. Female threads 24d are formed on the inner peripheral surface of the cylindrical part 24c, and the cap member 24 is threaded onto the male threads 20c of the joint member 20 via the female threads 24d.

As shown in FIG. 2, the extension part 24a is formed such that a free end at which the insertion hole 24b is provided is disposed more toward the radially inward side than an inner peripheral surface 2g of the outer tube 2a. Therefore, since the cap member 24 is joined to the outer case 2, the cap member 24 generates an axial force that acts on the inner case 1 via the extension part 24a. In other words, the inner case 1 that is disposed within the outer case 2 is retained within the outer case 2 by an axial force that is generated between the extension part 24a of the cap member 24 and the closing part 2c of the outer case 2. The cap member 24 and the joint member 20 may be joined by threading as described above, or may be joined by engagement. In the case that the cap member 24 and the joint member 20 are joined by threading, assembly and disassembly of the shock absorber 100 is easy. Further, the shape of the extension part 24a is not limited to an annular shape, and the extension part 24a may take any shape as long as it extends radially inward from the cylindrical part 24c and the free end thereof is disposed more toward the radially inward side than the inner peripheral surface 2g of the outer tube 2a.

The following are further formed on the inner peripheral surface of the cylindrical part 24c: a first annular groove 24e that accommodates a first seal member 29; and a second annular groove 24f that accommodates a second seal member 30. In a state in which the cap member 24 is threaded onto the joint member 20, the first seal member 29 is disposed so as to contact the outer peripheral surface of the seal part 20e of the joint member 20. Meanwhile, the second seal member 30 is disposed so as to contact the outer peripheral surface of the opening end 2b of the outer tube 2a in which the insert part 20b is embedded. By disposing the first seal member 29 and the second seal member 30 in this way, gas within the reservoir 130 that leaks out through the boundary between the joint member 20, which is a member formed of a metal, and the outer tube 2a, which is a member formed of a resin, can be prevented from being discharged to the outside.

An oil seal 11 is provided between the rod guide 7 of the inner case 1 and the outer case 2. The oil seal 11 includes the following: an annular seal main body 11a; an inner periphery seal part 11b that is attached to the inner periphery side of the seal main body 11a and slidingly contacts the outer periphery of the piston rod 4; and an outer periphery seal 11c that is attached to the outer periphery side of the seal main body 11a and contacts the inner periphery of the outer case 2 and the top surface of the rod guide 7.

The oil seal 11 is accommodated within the outer case 2 together with the inner case 1, and in this state, the oil seal 11 is fixed within the outer case 2 due to the cap member 24 being threaded onto the joint member 20. In detail, the seal main body 11a is sandwiched between the extension part 24a of the cap member 24 and the large-diameter part 7b of the rod guide 7, and thereby the oil seal 11 is retained. Hydraulic oil is prevented from leaking to the outside from between the piston rod 4 and the inner case 1 by the inner periphery seal part 11b, and hydraulic oil is prevented from leaking to the outside from between the inner case 1 and the outer case 2 by the outer periphery seal 11c. The seal main body 11a and the cap member 24 may be configured so that they directly contact each other, or a washer 28 may be interposed between the seal main body 11 a and the cap member 24 as shown in FIGS. 1 and 2.

The shock absorber 100 further includes a spring 5 that is accommodated within the reservoir 130 and biases the inner case 1 relative to the outer case 2 in the axial direction of the outer case 2.

The spring 5 is a coil spring, and in a compressed state, one end of the spring 5 is locked to the outer peripheral surface of the inner tube 6 and the other end is locked to the rod guide 7. In detail, as shown in FIG. 1, a C-pin 12 having a circular cross-section engages with the outer peripheral surface of the inner tube 6, and an annular spring seat 13 that locks the one end of the spring 5 is positioned in the axial direction by the C-pin 12. Meanwhile, the other end of the spring 5 is locked to a stepped part 7d between the small-diameter part 7a and the large-diameter part 7b of the rod guide 7. The spring seat 13 may be formed integrally with the inner tube 6, or may be fixed to the inner tube 6 by welding or the like. The spring 5 shown in FIG. 1 is a coil spring having a circular cross-section, but the spring 5 is not limited thereto, and may be an angular spring having a rectangular cross-section or may be configured by stacking disc springs.

The biasing force of the spring 5 acts to pull apart the inner tube 6 and the rod guide 7 in the axial direction. Axial direction movement of the inner tube 6 is restricted by the closing part 2c of the outer case 2 via the base valve 8, and axial direction movement of the rod guide 7 is restricted by the cap member 24 of the outer case 2 via the oil seal 11. Therefore, the spring 5 biases the inner case 1 relative to the outer case 2 in the axial direction of the outer case 2.

In general, in members that are injection molded using a resin, deformation over time called creep occurs if a state in which a constant load is applied continues. As described above, the inner case 1 is constantly pressed against the outer case 2 by the spring 5, and thus even if the outer case 2, which is formed of a resin, deforms due to creep, the inner case 1 is maintained in a state in which the inner case 1 abuts the outer case 2. As a result, any changes in the shape in the axial direction of the outer case 2 are compensated by the spring 5.

Next, the operation of the shock absorber 100 will be explained.

During extension of the shock absorber 100 in which the piston rod 4 moves out of the inner case 1, hydraulic oil moves via the passage 3a from the extension-side chamber 110, in which the volume is reduced due to the movement of the piston 3, to the contraction-side chamber 120, in which the volume is expanded. Further, hydraulic oil in an amount equivalent to the volume of the piston rod 4 that has moved out of the inner case 1 is supplied from the reservoir 130 through the passage 8a to the contraction-side chamber 120.

At this time, resistance is applied by the damping valve 18 against the flow of hydraulic oil passing through the passage 3a, and thus a damping force is generated.

During contraction of the shock absorber 100 in which the piston rod 4 moves into the inner case 1, hydraulic oil moves via the passage 3b from the contraction-side chamber 120, in which the volume is reduced due to the movement of the piston 3, to the extension-side chamber 110, in which the volume is expanded. Further, hydraulic oil in an amount equivalent to the volume of the piston rod 4 that has moved into the inner case 1 is discharged from the contraction-side chamber 120 through the passage 8b to the reservoir 130.

At this time, resistance is applied by the damping valve 17 against the flow of hydraulic oil passing through the passage 8b, and thus a damping force is generated.

As described above, in the shock absorber 100, hydraulic oil is supplied from the reservoir 130 to the contraction-side chamber 120 during extension, and hydraulic oil is discharged from the contraction-side chamber 120 to the reservoir 130 during contraction. Thereby, volume changes caused by the piston rod 4 moving into/out of the inner case 1 are compensated.

According to the first embodiment described above, the following effects are achieved.

The cap member 24 is coupled to the joint member 20 that is embedded in the outer tube 2a which is formed of a resin, and thereby the inner case 1 is retained within the outer case 2. Therefore, in the twin-tube type shock absorber in which the outer tube 2a is formed of a resin, the inner case 1, etc. can be retained within the outer case 2 without increasing the thickness of the outer tube 2a.

### <Second Embodiment>

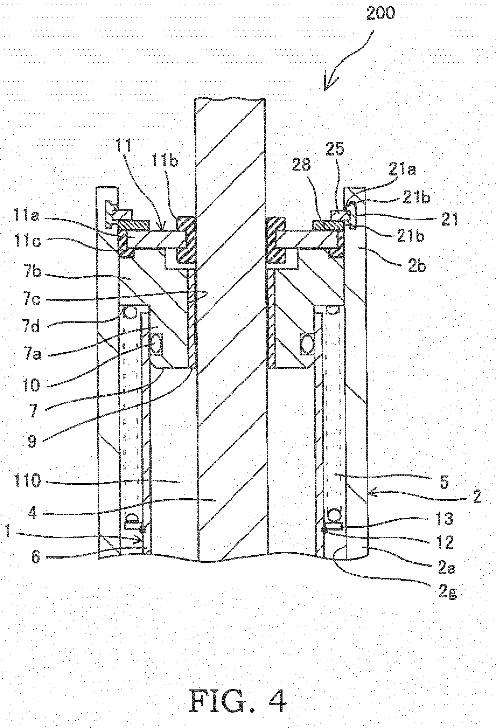

Next, a shock absorber 200 according to a second embodiment of the present invention will now be explained referring to FIG. 4. The following explanation will focus on the points of difference from the shock absorber 100 according to the first embodiment, and those constitutions which are the same as the first embodiment will be assigned the same reference numeral and explanations thereof will be omitted.

The basic constitution of the shock absorber 200 is the same as the shock absorber 100 according to the first embodiment. As shown in FIG. 4, the shock absorber 200 includes an annular joint member 21 that is embedded by insert molding in the inner periphery side of the opening end 2b of the outer tube 2a, and a ring member 25 which serves as a coupling member that is coupled to the joint member 21. In other words, in the shock absorber 200 according to the second embodiment, the shape and coupling position of the coupling member that retains the inner case 1 within the outer case 2 are different from the first embodiment.

The joint member 21 includes a groove 21a which serves as a recess that is formed around the entire periphery of the inner peripheral surface, and a protruding part 21b that protrudes in the axial direction in a state in which the joint member 21 is embedded in the outer tube 2a. The joint member 21 is formed of a steel material or aluminum alloy.

The protruding part 21b is formed in an annular shape and extends in the axial direction from the end on the outer periphery side of the joint member 21. In order to allow the resin to enter into the inner periphery side of the protruding part 21b during insert molding, the protruding part 21b includes a plurality of cutouts (not illustrated) that are cutout in the radial direction or a plurality of holes (not illustrated) that penetrate in the radial direction, the cutouts or holes being provided at intervals in the circumferential direction. Therefore, after insert molding, the protruding part 21b is in a state in which it is biting into the resin that forms the outer tube 2a. As a result, even if a force acts on the joint member 21 in the circumferential direction and the axial direction, the joint member 21 is prevented from falling out from the outer tube 2a. The protruding part 21b may be formed to protrude not only in the axial direction but also radially outward. By forming the protruding part 21b in this way, the bonding force between the joint member 21 and the outer tube 2a can be improved.

During insert molding, molten resin flows into the joint member 21 constituted as described above to the inner periphery side of the protruding part 21b while surrounding the joint member 21 from the outer periphery side. The opening end 2b of the outer tube 2a illustrated in FIG. 4 is formed in this way. The inner diameter of the opening end 2b is the same as the inner diameter of the joint member 21.

In this way, in the shock absorber 200 according to the second embodiment, insert molding is carried out so that the joint member 21 is disposed on the inner periphery side of the outer tube 2a. Therefore, even if a sink occurs, gaps, etc. due to the sink are not easily formed between the joint member 21 and the outer tube 2a compared to a case in which the joint member 21 is disposed on the outer periphery side of the outer tube 2a. As a result, the bonding force between the joint member 21 and the outer tube 2a can be secured.

The ring member 25 is an arc-shaped or C-shaped metallic member having an abutment in which a portion of the circular ring is missing, and the cross-section of the ring member 25 has the same shape as the cross-section of the groove 21a. For example, if the cross-section of the groove 21a is rectangular, then the cross-section of the ring member 25 is also made to be rectangular. As the ring member 25, a snap ring with a rectangular cross-section, a C-shaped pin with a circular cross-section, and the like can be used.

The ring member 25 is inserted into the opening end 2b of the outer tube 2a in a constricted state in which the abutment is narrowed, and an outer edge side of the ring member 25 is fitted into the groove 21a. The ring member 25 expands in diameter due to elasticity within the groove 21a, and thus the ring member 25 does not come out from the groove 21a even if an axial direction force acts on the ring member 25.

As shown in FIG. 4, an inner edge side of the ring member 25 is disposed more toward the radially inward side than the inner peripheral surface 2g of the outer tube 2a. Therefore, the ring member 25 that is fitted into the groove 21a exerts an axial force on the inner case 1 disposed within the outer case 2 via the washer 28 and the oil seal 11.

In this way, similar to the first embodiment, the inner case 1 in the second embodiment is retained within the outer case 2 by an axial force that is generated between the ring member 25, which is the coupling member, and the closing part 2c of the outer case 2.

The ring member 25 and the seal main body 11a may be configured so that they directly contact each other, or the washer 28 may be interposed between the seal main body 11a and the ring member 25 as shown in FIG. 4.

In the case that a member having a circular cross-section such as a C-shaped pin is used as the ring member 25, a cutout matching the cross-section shape of the ring member 25 is preferably provided in the seal main body 11a or the washer 28. Thereby, the contact state between the seal main body 11a or the washer 28 and the ring member 25 is surface contact rather than linear contact or point contact. Therefore, variation in the circumferential direction of axial forces exerted on the inner case 1 can be suppressed. In the case that a member having a rectangular cross-section such as a snap ring is used as the ring member 25, there is surface contact between the seal main body 11a or the washer 28 and the ring member 25, and thus such a cutout does not need to be provided.

The groove 21a into which the ring member 25 is fitted may be formed over the entire periphery of the inner peripheral surface of the joint member 21, or may be formed in a portion of the inner peripheral surface of the joint member 21 to match the shape of the ring member 25. Similarly, the shape of the joint member 21 is not limited to an annular shape, and may be an arc shape or a C shape so as to match the shape of the ring member 25.

Similar to the first embodiment, the spring 5 that biases the inner case 1 in the axial direction relative to the outer case 2 is provided. Therefore, in the second embodiment as well, any changes in the shape in the axial direction of the outer case 2 due to creep or the like can be compensated.

According to the second embodiment described above, the following effects are achieved.

The ring member 25 is coupled to the joint member 21 that is embedded in the outer tube 2a which is formed of a resin, and thereby the inner case 1 is retained within the outer case 2. Therefore, in the twin-tube type shock absorber in which the outer tube 2a is formed of a resin, the inner case 1, etc. can be retained within the outer case 2 without increasing the thickness of the outer tube 2a.

### <Third Embodiment>

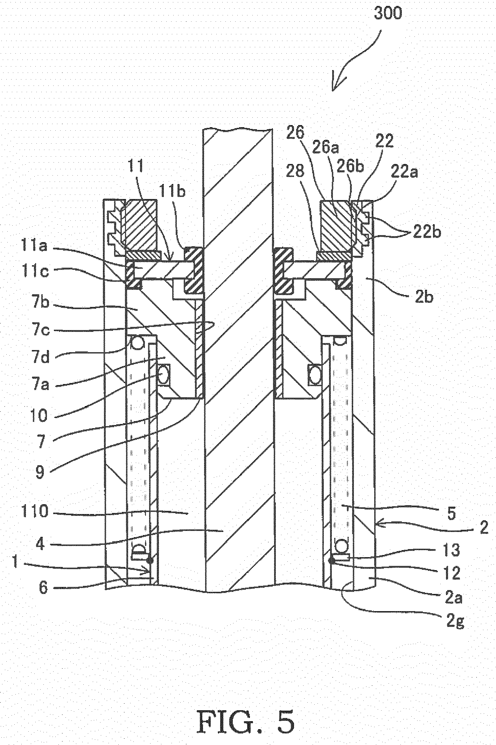

Next, a shock absorber 300 according to a third embodiment of the present invention will now be explained referring to FIG. 5. The following explanation will focus on the points of difference from the shock absorber 100 according to the first embodiment, and those constitutions which are the same as the first embodiment will be assigned the same reference numeral and explanations thereof will be omitted.

The basic constitution of the shock absorber 300 is the same as the shock absorber 100 according to the first embodiment. As shown in FIG. 5, the shock absorber 300 includes an annular joint member 22 that is embedded by insert molding in the inner periphery side of the opening end 2b of the outer tube 2a, and a ring member 26 which serves as a coupling member that is coupled to the joint member 22. In other words, in the shock absorber 300 according to the third embodiment, the shape and coupling position of the coupling member that retains the inner case 1 within the outer case 2 are different from the first embodiment.

The joint member 22 includes female threads 22a that are formed on the inner peripheral surface, and protruding parts 22b that protrude radially outward in a state in which the joint member 22 is embedded in the outer tube 2a. The joint member 22 is formed of a steel material or aluminum alloy.

The protruding parts 22b are formed in an annular shape and extend radially outward from the outer periphery end of the joint member 22. A plurality of the protruding parts 22b are provided at intervals in the axial direction. In order to allow the resin to enter between the plurality of protruding parts 22b during insert molding, the protruding parts 22b include a plurality of cutouts (not illustrated) that are cutout in the axial direction and are provided at intervals in the circumferential direction. Therefore, after insert molding, the protruding parts 22b are in a state in which they are biting into the resin that forms the outer tube 2a. As a result, even if a force acts on the joint member 22 in the circumferential direction and the axial direction, the joint member 22 is prevented from falling out from the outer tube 2a. The protruding parts 22b may be formed to protrude not only radially outward but also in the axial direction. By forming the protruding parts 22b in this way, the bonding force between the joint member 22 and the outer tube 2a can be improved.

During insert molding, molten resin flows into the joint member 22 constituted as described above into spaces sandwiched by the protruding parts 22b while surrounding the joint member 22 from the outer periphery side. The opening end 2b of the outer tube 2a illustrated in FIG. 5 is formed in this way. The inner diameter of the opening end 2b is the same as the inner diameter of the joint member 22, and the position of the end face in the axial direction of the opening end 2b is the same as the position of the end face of the joint member 22.

In this way, in the shock absorber 300 according to the third embodiment, insert molding is carried out so that the joint member 22 is disposed on the inner periphery side of the outer tube 2a. Therefore, even if a sink occurs, gaps, etc. due to the sink are not easily formed between the joint member 22 and the outer tube 2a compared to a case in which the joint member 22 is disposed on the outer periphery side of the opening end 2b of the outer tube 2a. As a result, the bonding force between the joint member 22 and the outer tube 2a can be secured.

The ring member 26 is a metallic member having an annular main body 26a, and male threads 26b formed on the outer peripheral surface of the main body 26a. The ring member 26 is threaded into the female threads 22a of the joint member 22 via the male threads 26b. The main body 26a of the ring member 26 is disposed more toward the radially inward side than the inner peripheral surface 2g of the outer tube 2a, as shown in FIG. 5. Therefore, the ring member 26 that is threaded into the joint member 22 exerts an axial force on the inner case 1 disposed within the outer case 2 via the washer 28 and the oil seal 11.

In this way, similar to the first embodiment, the inner case 1 in the third embodiment is retained within the outer case 2 by an axial force that is generated between the ring member 26, which is the coupling member, and the closing part 2c of the outer case 2.

The ring member 26 and the seal main body 11a may be configured so that they directly contact each other, or the washer 28 may be interposed between the seal main body 11a and the ring member 26 as shown in FIG. 5. Further, the joining of the joint member 22 and the ring member 26 is not limited to joining by threading, and they may be joined by engagement. In the case that the joint member 22 and the ring member 26 are joined by threading, assembly and disassembly of the shock absorber 300 is easy.

Similar to the first embodiment, the spring 5 that biases the inner case 1 in the axial direction relative to the outer case 2 is provided. Therefore, in the third embodiment as well, any changes in the shape in the axial direction of the outer case 2 due to creep or the like can be compensated.

According to the third embodiment described above, the following effects are achieved.

The ring member 26 is coupled to the joint member 22 that is embedded in the outer tube 2a which is formed of a resin, and thereby the inner case 1 is retained within the outer case 2. Therefore, in the twin-tube type shock absorber in which the outer tube 2a is formed of a resin, the inner case 1, etc. can be retained within the outer case 2 without increasing the thickness of the outer tube 2a.

The constitutions, operations, and effects of the embodiments of the present invention will now be summarized below.

The shock absorber 100, 200, 300 includes the following: the inner case 1 that is filled with hydraulic oil; and the outer case 2 that is disposed so as to cover the inner case 1, wherein the reservoir 130 that stores the hydraulic fluid is formed between the outer case 2 and the inner case 1. The outer case 2 includes the following: the bottomed cylindrical outer tube 2a that is formed of a resin and is closed at one end by the closing part 2c; and the cylindrical joint member 20, 21, 22 that is embedded by insert molding in the opening end 2b of the outer tube 2a. The shock absorber 100 further includes the coupling member 24, 25, 26 that is coupled to the joint member 20, 21, 22, and the inner case 1 is sandwiched by the coupling member 24, 25, 26 and the closing part 2c of the outer tube 2a so as to be retained within the outer case 2.

In this constitution, the coupling member 24, 25, 26 is coupled to the joint member 20, 21, 22 which is embedded in the outer tube 2a formed of a resin, and thereby exerts an axial force on the inner case 1. In other words, the inner case 1, which is sandwiched by the coupling member 24, 25, 26 and the closing part 2c of the outer tube 2a, is retained within the outer case 2 by an axial force that is generated between the coupling member 24, 25, 26 and the closing part 2c of the outer case 2. In this way, in the twin-tube type shock absorber in which the outer tube 2a is formed of a resin, the inner case 1, etc. can be retained within the outer case 2 without increasing the thickness of the outer tube 2a.

The joint member 20 is a cylindrical member that has on one end side the insert part 20b which is embedded in the opening end 2b of the outer tube 2a, and has on the other side the joining part 20a to which the cap member 24 is coupled.

In this constitution, the cap member 24, which exerts an axial force on the inner case 1, is coupled to the cylindrical joint member 20, which is embedded in the opening end 2b of the outer tube 2a. In this way, an axial force which acts on the inner case 1 can be generated by a simple constitution in which the cap member 24 is coupled to the cylindrical joint member 20 that is embedded in the outer tube 2a.

The insert part 20b has the locking holes 20d into which molten resin flows during insert molding.

In this constitution, molten resin flows into the locking holes 20d formed in the insert part 20b during insert molding. The joint member 20 is suppressed from coming out of the outer tube 2a by the resin which has flowed into the locking holes 20d, and the bonding force between the joint member 20 and the outer tube 2a can be improved.

The cap member 24 includes the cylindrical part 24c that covers the outer periphery side of the joint member 20 and extends straddling the boundary between the joining part 20a and the insert part 20b. The first seal member 29 that seals a gap between the joining part 20a and the cylindrical part 24c is provided between the outer peripheral surface of the joining part 20a and the inner peripheral surface of the cylindrical part 24c, and the second seal member 30 that seals a gap between the outer tube 2a and the cylindrical part 24c is provided between the outer peripheral surface of the opening end 2b of the outer tube 2a into which the insert part 20b is embedded and the inner peripheral surface of the cylindrical part 24c.

In this constitution, the gap between the joining part 20a of the joint member 20 and the cylindrical part 24c of the cap member 24 is sealed by the first seal member 29, and the gap between the outer tube 2a and the cylindrical part 24c of the cap member 24 is sealed by the second seal member 30. Therefore, by disposing the first seal member 29 and the second seal member 30 in this way, gas within the reservoir 130 that leaks out through the boundary between the joint member 20, which is a member formed of a metal, and the outer tube 2a, which is a member formed of a resin, can be prevented from being discharged to the outside.

The joint member 21, 22 is an annular-shaped or arc-shaped member, wherein the joining part 21a, 22a to which the coupling member 25, 26 is coupled is provided on the inner peripheral surface of the joint member 21, 22. The outer peripheral surface side of the joint member 21, 22 is embedded in the opening end 2b of the outer tube 2a.

In this constitution, the coupling member 25, 26, which exerts an axial force on the inner case 1, is coupled to the inner periphery side of the joint member 21, 22, which is embedded in the opening end 2b of the outer tube 2a. In this way, an axial force which acts on the inner case 1 can be generated by a simple constitution in which the coupling member 25, 26 is coupled to the inner periphery side of the joint member 21, 22 which is embedded in the outer tube 2a.

The groove 21a is formed in the inner peripheral surface of the joint member 21, and the ring member 25 is fitted into the groove 21a.

In this constitution, the ring member 25, which exerts an axial force on the inner case 1, is fitted into the groove 21a formed in the inner peripheral surface of the joint member 21. In this way, an axial force that acts on the inner case 1 can be generated merely by fitting the ring member 25 into the inner periphery side of the joint member 21 that is embedded in the outer tube 2a.

The joint member 20, 22 and the coupling member 24, 26 are joined by screwing.

In this constitution, since the joint member 20, 22 and the coupling member 24, 26 are joined by threading, assembly and disassembly of the shock absorber 100, 300 is easy.

The joint member 20, 21, 22 is embedded in the inner periphery side of the opening end 2b of the outer tube 2a.

In this constitution, insert molding is carried out in a state in which the joint member 20, 21, 22 is disposed on the inner periphery side of the outer tube 2a. Therefore, even if a sink occurs after insert molding, gaps, etc. due to the sink are not easily formed between the joint member 20, 21, 22 and the outer tube 2a compared to a case in which the joint member 20, 21, 22 is disposed on the outer periphery side of the outer tube 2a. As a result, the bonding force between the joint member 20, 21, 22 and the outer tube 2a can be secured.

The joint member 21, 22 has the protruding part(s) 21b, 22b that protrude in the axial direction or radially outward in a state in which the joint member 21, 22 is embedded in the opening end 2b of the outer tube 2a.

In this constitution, after insert molding, the protruding part(s) 21b, 22b is in a state in which it is biting into the resin that forms the outer tube 2a. As a result, even if a force acts on the joint member 21, 22 in the circumferential direction and the axial direction, the joint member 21, 22 can be prevented from falling out from the outer tube 2a.

Embodiments of the present invention were described above, but the above embodiments are merely examples of applications of the present invention, and the technical scope of the present invention is not limited to the specific constitutions of the above embodiments.

For example, in the above-described embodiments, the shock absorber 100, 200, 300 is used in a vehicle such as an automobile, but the shock absorber may also be used in other vehicles such as a train as well as in a building.

Further, in the above-described embodiments, hydraulic oil is used as the hydraulic fluid, but other liquids such as water may also be used.

This application claims priority based on Japanese Patent Application No. 2014-187272 filed with the Japan Patent Office on September 16, 2014, the entire contents of which are incorporated into this specification.

## Claims

1. A shock absorber comprising:
an inner case filled with hydraulic fluid; and
an outer case disposed so as to cover the inner case, the outer case forming a reservoir for storing the hydraulic fluid between the outer case and the inner case,
wherein the outer case comprises:
a bottomed cylindrical outer tube formed of a resin, the outer tube being closed at one end by a closing part; and
a joint member embedded by insert molding in an opening end of the outer tube,
wherein the shock absorber further comprises a coupling member coupled to the joint member, and
wherein the inner case is sandwiched by the coupling member and the closing part of the outer tube so as to be retained within the outer case.

2. The shock absorber according to claim 1, wherein the joint member is a cylindrical member that has on one end side an insert part which is embedded in the opening end of the outer tube, and has on the other end side a joining part to which the coupling member is coupled.

3. The shock absorber according to claim 2, wherein the insert part comprises a locking hole into which molten resin flows during insert molding.

4. The shock absorber according to claim 2, wherein the coupling member comprises a cylindrical part that covers an outer periphery side of the joint member and extends straddling a boundary between the joining part and the insert part,
wherein a first seal member is provided between an inner peripheral surface of the cylindrical part and an outer peripheral surface of the joining part, the first seal member being configured to seal a gap between the joining part and the cylindrical part, and
wherein a second seal member is provided between the inner peripheral surface of the cylindrical part and an outer peripheral surface of the opening end of the outer tube into which the insert part is embedded, the second seal member being configured to seal a gap between the outer tube and the cylindrical part.

5. The shock absorber according to claim 1, wherein the joint member is an annular-shaped or arc-shaped member,
wherein a joining part to which the coupling member is coupled is provided on an inner peripheral surface of the joint member, and
wherein an outer peripheral surface side of the joint member is embedded in the opening end of the outer tube.

6. The shock absorber according to claim 5, wherein the joining part is a recess formed in the inner peripheral surface of the joint member,
wherein the coupling member is fitted into the recess.

7. The shock absorber according to claim 1, wherein the joint member and the coupling member are joined by screwing.

8. The shock absorber according to claim 1, wherein the joint member is embedded in an inner periphery side of the opening end of the outer tube.

9. The shock absorber according to claim 1, wherein the joint member comprises a protruding part that protrudes in the axial direction or radially outward in a state in which the joint member is embedded in the opening end of the outer tube.
